# EUROPÄISCHE PATENTSCHRIFT

(11) **EP 1 963 045 B1**
(45) Veröffentlichungstag und Bekanntmachung des Hinweises auf die Patenterteilung: **04.11.2009**
(21) Anmeldenummer: 05819405.1
(22) Anmeldetag: 15.12.2005
(51) Int. Cl.: B23K 26/42, G01M 11/02, G01N 29/04

(54) **VERFAHREN UND LASERANORDNUNG MIT EINER VORRICHTUNG ZUR ZUSTANDSERKENNUNG EINES OPTISCHEN ELEMENTS**
METHOD OF DETECTING THE STATE OF AN OPTICAL ELEMENT AND LASER ARRANGEMENT WITH A DEVICE FOR DETECTING THE STATE OF AN OPTICAL ELEMENT
PROCEDE DE DETECTION DE L'ETAT D'UN ELEMENT OPTIQUE ET LASER AVEC UN DISPOSITIF POUR LA DETECTION DE L'ETAT D'UN ELEMENT OPTIQUE

(43) Veröffentlichungstag der Anmeldung: 03.09.2008
(73) Patentinhaber: TRUMPF Werkzeugmaschinen GmbH + Co. KG, 71254 Ditzingen (DE)
(72) Erfinder: HAMMANN, Gerhard, 70825 Korntal-Münchingen (DE); HALLASCH, Dieter, 71254 Ditzingen (DE); HOHENADEL, Jürgen, 71701 Schwieberdingen (DE)
(74) Vertreter: Kohler Schmid Möbus
(86) Internationale Anmeldenummer: PCT/EP2005/013534
(87) Internationale Veröffentlichungsnummer: WO 2007/073744

(56) Entgegenhaltungen:
- EP-A- 1 310 782
- DE-A1- 10 108 955
- US-A- 6 118 527
- US-B1- 6 370 171
- PATENT ABSTRACTS OF JAPAN Bd. 011, Nr. 367 (E-561), 28. November 1987 (1987-11-28) & JP 62 139374 A (MATSUSHITA ELECTRIC IND CO LTD), 23. Juni 1987 (1987-06-23)

## Beschreibung

Die Erfindung betrifft ein Verfahren und eine Vorrichtung zur Zustandserkennung oder Zustandsänderungserkennung eines optischen Elements einer Laseranordnung, insbesondere einer Laserbearbeitungsmaschine, bei dem eine sich bei einer Temperaturänderung des optischen Elements verändernde Größe erfasst wird.

Der Laserschneidprozess ist unter anderem von der Güte und dem Zeitverhalten des fokussierten Laserstrahls abhängig. Zur Führung und Formung des Laserstrahls werden Linsen oder Spiegel verwendet, welche somit maßgeblichen Einfluss auf das Schneidergebnis haben. Ein Verschleiß der Linse (oder anderer optischer Elemente in der Strahlführung) erhöht die Absorption der Laserstrahlung. Die daraus resultierende stärkere Erwärmung hat veränderte optische Eigenschaften, wie z. B. einen größeren Fokus-Shift zur Folge.

Da eine Temperaturänderung des optischen Elements häufig eine Zustandsänderung des optischen Elements mit sich bringt, wurden verschiedene Verfahren vorgeschlagen, um die Temperatur eines optischen Elements oder eine diese beschreibende Größe zu erfassen.

In der EP 1 310 782 A1 wird eine Widerstandsmessung offenbart. Die Änderung einer physikalischen Größe, beispielsweise der Temperatur, durch die absorbierte Strahlung wird erfasst und als Informationsquelle für den Zustand des optischen Elements genutzt. Dabei wird die Temperatur durch die Messung eines elektrischen Widerstands ermittelt.

In der DE 203 14 918 U1 ist eine Vorrichtung zur Überwachung eines Schutzglases einer Laseroptik auf Bruch und/oder Verschmutzung offenbart, wobei mindestens ein am Umfang der Stirnfläche des Schutzglases angeordneter Fotodetektor vorgesehen ist, der mit einer Auswerteeinrichtung verbunden ist. Dem Fotodetektor ist mindestens eine elektromagnetische Strahlungsquelle zugeordnet, deren elektromagnetische Strahlung über die Stirnfläche des Schutzglases eingekoppelt wird.

In der DE 10 2004 006 565 A1 wird vorgeschlagen, eine Längenänderung eines optischen Elements zu messen und anschließend aus der Längenänderung eine Temperaturänderung zu ermitteln, die auf eine Änderung der optischen Eigenschaften zurückgeht. Die Längenänderung kann entlang des Umfangs des optischen Elements gemessen werden und gegebenenfalls in Verbindung mit weiteren Längenmessungen zur Bestimmung der Volumenänderung der optischen Komponenten verwendet werden, aus welcher dann eine Temperaturänderung ermittelt wird.

In der Der 197 094 73 A1 wird vorgeschlagen, dass zur Ermittlung des Verschleißgrades einer Linsenanordnung bei der Bearbeitung eines Werkstücks mittels eines Laserstrahls zunächst das Werkstück mithilfe des Laserstrahls durchstochen wird, wobei eine zum Durchstechen des Werkstücks erforderliche Einstechzeit gemessen und mit einer vorbestimmten Referenzeinstichzeit verglichen wird, um zum Beispiel ein Warnsignal zu erzeugen, wenn beide Einstechzeiten um mehr als einen vorgegebenen Toleranzwert voneinander abweichen. Weiterhin wird vorgeschlagen, mit dem Laserstrahl eine Spur auf dem Werkstück zu erzeugen und zu unterschiedlichen Zeitpunkten die vom Werkstück kommende Strahlung zu messen, um durch einen Vergleich der Strahlungsmesswerte auf den Verschleißzustand der Linsenanordnung zu schließen.

In der WO 98/33059 A1 wird vorgeschlagen, mittels eines Fotodetektors das durch Verschmutzung erzeugte Streulicht zu erfassen.

Eine taktile Temperaturmessung am Linsenrand gibt die relevante Belastung des Linsenzentrums nicht wieder und weist zu hohe Zeitkonstanten auf. Eine optische Temperaturmessung des Linsenkörpers ist ungenau und kann daher nicht verwendet werden. Die Messung einer temperaturbedingten Längen- beziehungsweise Volumenänderung des optischen Elements in einer Laseranordnung, insbesondere einer Laserschneidmaschine, ist ebenfalls nicht praktikabel.

Aufgabe der vorliegenden Erfindung ist es, ein Verfahren und eine Vorrichtung bereitzustellen, mit denen auf einfache Art und Weise der Zustand, beziehungsweise eine Zustandsänderung eines optischen Elements einer Laseranordnung zuverlässig bestimmbar sind.

Diese Aufgabe wird durch ein Verfahren der eingangs genannten Art gelöst, bei dem in das optische Element ein Ultraschallsignal eingekoppelt wird und die Laufzeit und/oder eine Laufzeitänderung des Ultraschallsignals entlang einer vorgegebenen oder vorgebbaren Strecke durch das optische Element erfasst wird. Die ermittelte Laufzeit beziehungsweise die ermittelte Laufzeitänderung kann mit einer Referenzgröße verglichen werden, wobei die Referenzgröße in einer Referenzmessung ermittelt werden kann oder vorgegeben werden kann. Die Messung der Laufzeit kann mit Standardkomponenten erfolgen. Weiterhin kann sie erfolgen, ohne die restliche Laseranordnung zu beeinflussen. Schon geringe Temperaturänderungen bewirken eine Veränderung der Laufzeit, so dass die Temperatur des optischen Elements mit einer hohen Auflösung gemessen bzw. ermittelt werden kann. Durch geeignete Wahl der Strecke kann sichergestellt werden, dass nur die tatsächliche Temperatur beziehungsweise die mit dieser zusammenhängende durch eine Temperaturänderung des optischen Elements bewirkte Laufzeit oder Laufzeitänderung erfasst wird und die Messung nicht durch die Temperatur beispielsweise einer Fassung des optischen Elements verfälscht wird. Die Auflösung der Laufzeitmessung sollte vorzugsweise im Nanosekundenbereich liegen. Das Verfahren ist für alle optischen Elemente (z.B. Spiegel, Linsen, Auskoppler) einer Laseranordnung einsetzbar, insbesondere auch für optische Elemente im Laser.

Bei einer besonders bevorzugten Verfahrensvariante kann vorgesehen sein, dass aus der Laufzeit und/oder Laufzeitänderung auf den Absorptionsgrad von elektromagnetischer Strahlung des optischen Elements oder auf eine Änderung des Absorptionsgrads geschlossen wird. Somit kann durch die Ermittlung der Laufzeit oder einer Laufzeitänderung auf eine Verschmutzung oder einen Verschleiß, beispielsweise als Folge von Alterungserscheinungen des optischen Elements geschlossen werden. Vorzugsweise wird dabei zwischen einer Laufzeitänderung aufgrund von normaler Temperaturänderung (Erwärmung) des optischen Elements im Betrieb und einer Laufzeitänderung wegen einer absorptionsbedingten Temperaturerhöhung unterschieden.

Vorteilhafterweise wird aus der Laufzeit und/oder Laufzeitänderung auf die Temperatur oder eine Temperaturänderung des optischen Elements geschlossen. Ein Maß für den Verschleiß ist sowohl die stationäre Temperatur des optischen Elements als auch ein zeitlicher Temperaturgradient. Über die Laufzeitmessung kann die Temperatur des optischen Elements gemittelt über die durch das Ultraschallsignal zurückgelegte Strecke ermittelt werden.

Vorzugsweise wird die vorgegebene oder vorgebbare Strecke so gewählt, dass sie durch das Zentrum, insbesondere den Mittelpunkt, des optischen Elements verläuft. Dadurch kann die Temperatur im Zentrum ermittelt werden oder ist die Temperatur im Zentrum zumindest in der über die Strecke gemittelten Temperatur enthalten. Somit kann die Temperatur in demjenigen Teil des optischen Elements erfasst werden, der beim Durchtritt eines Laserstrahls am stärksten erwärmt wird. Bei einem runden optischen Element wird dazu vorzugsweise das Ultraschallsignal radial in das optische Element eingekoppelt.

Wenn die Strecke ausschließlich durch Randbereiche des optischen Elements verläuft, insbesondere das Zentrum meidet, können Informationen über Verschleiß und Verschmutzung in Randbereichen des optischen Elements ermittelt werden.

Besonders bevorzugt ist es, wenn das Ultraschallsignal mittels Reflektion mehrmals durch das optische Element geführt wird. Die Ausnutzung von Reflexionen bietet die Möglichkeit, nur einen Wandler (zum Senden und Empfangen) zu verwenden. Weiterhin kann die Laufzeit und somit die Auflösung des Systems durch Ein - oder Mehrfachreflektionen erhöht werden. Auch bestimmte Bereiche des optischen Elements können durch das Reflektionsverhalten des Ultraschalls am Rand des optischen Elements zur Laufzeitmessung und damit zur Temperaturmessung herangezogen werden. Das Ultraschallsignal kann beispielsweise sternförmig, dreieckförmig oder rechteckförmig durch das optische Element geführt werden.

Bei einer Verfahrensvariante kann vorgesehen sein, dass ein Laufzeitgradient ermittelt wird. Daraus kann ein Temperaturgradient ermittelt werden. Bei einer Temperaturänderung reagiert das optische Element mit einer gewissen Verzögerung, die durch eine Zeitkonstante bedingt ist. Die Zeitkonstante eines optischen Elements liegt in der Regel im Bereich von 5 - 10 Sekunden. Soll eine Absoluttemperatur erfasst werden, muss gewartet werden, bis sich eine stationäre Temperatur eingestellt hat. Wird dagegen ein Temperaturgradient ermittelt, kann die Messung in kürzeren Zeitintervallen erfolgen. Unterschiede in der Absorption der optischen Elemente sind durch unterschiedliche Gradienten der Laufzeitänderung erkennbar. Dies kann einen Hinweis auf die Alterung beziehungsweise den Verschleiß eines optischen Elements liefern.

Bei einer besonders bevorzugten Verfahrensvariante kann vorgesehen sein, dass das optische Element mit einer elektromagnetischen Strahlung, insbesondere einem Laser, beaufschlagt wird und die Laufzeit und/oder Laufzeitänderung während der Bestrahlung und für eine vorgegebene oder vorgebbare. Zeitspanne nach Beendigung der Bestrahlung erfasst wird. Hierdurch können temperaturbedingte Laufzeitänderungen eines optischen Elements ermittelt werden. Während der Einschaltzeit des Lasers erwärmt sich das optische Element und kühlt dann wieder ab, sobald der Laser ausgeschaltet ist.

Wenn das optische Element mehrmals nacheinander intervallartig mit elektromagnetischer Strahlung beaufschlagt wird, können Störeinflüsse auf die Messung erkannt werden.

Vorzugsweise wird die Laufzeit oder Laufzeitänderung in vorgegebenen oder vorgebbaren zeitlichen Abständen erfasst. Durch die Wahl der zeitlichen Abstände kann die Auflösung der Temperaturermittlung eingestellt werden.

Die Überprüfung des Zustands eines optischen Elements kann im Betrieb, quasi "online" erfolgen. Auf Zustandsänderungen kann dadurch besonders schnell reagiert werden. Alternativ oder zusätzlich kann vorgesehen sein dass zu Beginn eines neuen Schneidprozesses der Zustand des optischen Elements überprüft wird. Insbesondere, wenn in einer Lageranlage mit geringer Laserleistung gearbeitet wird und eine Temperaturänderung bei dieser geringen Laserleistung nicht erkennbar ist, kann zwischen zwei Schneidvorgängen der Laser mit einer höheren Leistung betrieben werden, so dass Laufzeitänderungen und der Zustand des optischen Elements feststellbar sind.

Besonders vorteilhaft ist es, wenn die die Umgebung des optischen Elements beschreibende Größen erfasst und/oder vorgegeben werden und bei der Auswertung der Laufzeiten und/oder Laufzeitänderungen berücksichtigt werden. Die Erwärmung des optischen Elements ist von mehreren Größen abhängig. Einflussgrößen sind beispielsweise die Laserleistung, die Strahlungsdauer und die Bauteilkühlung (beispielsweise durch ein Schneidgas). Zur zuverlässigen Absorptionsdetektion sollten diese Einflussgrößen bekannt sein und berücksichtigt werden. Aktuelle Temperaturänderungen des optischen Elements können ebenfalls erfasst werden. Diese Informationen können gegebenenfalls zur Steuerung der Laserleistung verwendet werden.

In diesem Zusammenhang ist es besonders vorteilhaft, wenn in Abhängigkeit der die Umgebung beschreibenden Größen ein Kennfeld generiert wird und eine aktuelle Laufzeit oder Laufzeitänderung anhand des Kennfelds analysiert wird.

In den Rahmen der Erfindung fällt außerdem eine Laseranordnung, insbesondere Laserbearbeitungsmaschine, mit zumindest einem optischen Element, welches in dem Strahlengang eines Laserstrahls angeordnet ist und einer Erfassungseinrichtung zur Erfassung einer sich bei einer Temperaturänderung verändernden Größe, wobei ein Ultraschallsender zum Einkoppeln von Ultraschall in das optische Element vorgesehen ist und die Erfassungseinrichtung einen Ultraschallempfänger umfasst. Mit einer derartigen Vorrichtung kann der aktuelle Zustand eines optischen Elements erfasst werden und können Zustandsänderungen, beispielsweise eine Erwärmung wegen Absorption aufgrund von Verschmutzung oder Verschleiß, erkannt werden. Optische Elemente sind beispielsweise Spiegel, Linsen, Auskoppler und dergleichen. Der Ultraschallsender und der Ultraschallempfänger können an unterschiedlichen Stellen im Bereich des optischen Elements angeordnet sein. Es muss sichergestellt sein, dass der Ultraschallempfänger am Ende der vom Ultraschallsignal zurückgelegten Strecke liegt. Beispielsweise kann die Strecke des Ultraschallsignals dem Durchmesser des optischen Elements entsprechen. Ultraschallempfänger und Ultraschallsender müssen sich daher gegenüberliegend angeordnet sein. Die Erfassungseinrichtung kann als Ultraschallempfänger ausgebildet sein.

Eine besonders kostengünstige Anordnung ergibt sich, wenn die Erfassungseinrichtung den Ultraschallsender und den Ultraschallempfänger umfasst. Dadurch muss nur ein Ultraschallwandler vorgesehen werden, der sowohl senden als auch empfangen kann. Damit nur ein einziger Wandler verwendet werden kann, muss das Ultraschallsignal einmal oder mehrmals reflektiert werden, um sicherzustellen, dass es wieder beim Wandler ankommt.

Wenn zumindest ein Reflektor zur Reflektion des Ultraschallsignals vorgesehen ist, kann die vom Ultraschallsignal zurückgelegte Strecke künstlich verlängert werden. Durch diese Maßnahme kann die Auflösung erhöht werden.

Um Reflexionen zwischen dem Ultraschallwandler, insbesondere dem Ultraschallempfänger, und dem optischen Element zu verhindern, kann zumindest ein Koppelelement vorgesehen sein, das zwischen einem Ultraschallsender oder Ultraschallempfänger und dem optischen Element angeordnet ist. Ein Ultraschallsignal im Bereich von 10 MHz wird in Luft oder einem Gas nicht weitergeleitet sondern reflektiert. Durch die Verwendung eines Koppelelements zwischen Ultraschallsender und Ultraschallempfänger einerseits und optischem Element andererseits kann sichergestellt werden, dass das Ultraschallsignal auch tatsächlich in das optische Element eingekoppelt und aus diesem ausgekoppelt wird. Das Koppelelement kann dabei mittels des Wandlers an den Rand des optischen Elements geklemmt werden, so dass die Schallkeule durch die Mitte des optischen Elements auf den gegenüberliegenden Rand des optischen Elements trifft und von dort zum Wandler zurückreflektiert wird.

Um eine gute Einkopplung sicherzustellen ist es vorteilhaft, wenn das Koppelelement an das optische Element anpassbar ist. Dazu ist das Koppelelement vorzugsweise als Koppelkissen, welches verformbar ist, ausgebildet. Vorzugsweise ist das Koppelkissen aus Kunststoff, insbesondere Polyurethan, hergestellt und weist eine ausreichende Temperaturfestigkeit auf.

Bei einer bevorzugten Ausführungsform ist eine mit der Erfassungseinrichtung verbundene Auswerteeinrichtung vorgesehen. In der Auswerteeinrichtung können Laufzeiten und Laufzeitänderungen analysiert werden. Es kann vorgesehen sein, dass die Auswerteeinrichtung mit einer Signalisierungseinrichtung zusammenwirkt, so dass ein optisches Element mit einer erhöhten Absorption angezeigt werden kann. Alternativ oder zusätzlich kann die Auswerteeinrichtung mit einer Steuerung der Laseranordnung verbunden sein, so dass die Informationen über den Zustand oder Zustandsänderungen des optischen Elements beim Betrieb der Laseranordnung, insbesondere bei der Einstellung der Laserleistung, berücksichtigt werden können. Bevorzugte Ausführungsbeispiele der Erfindung sind in der Zeichnung schematisch dargestellt und werden nachfolgend mit Bezug zu den Figuren der Zeichnung näher erläutert. Es zeigt:
- Fig. 1: eine schematische Darstellung einer Laseranordnung;
- Fig. 2: eine teilweise Schnittdarstellung eines Laserbearbeitungskopfes;
- Fig. 3a - 3d: schematische Darstellungen zur beispielhaften Erläuterung unterschiedlicher Signalwege des Ultraschallsignals;
- Fig. 4: beispielhaft ein Diagramm einer erfassten Laufzeitänderung über die Zeit.

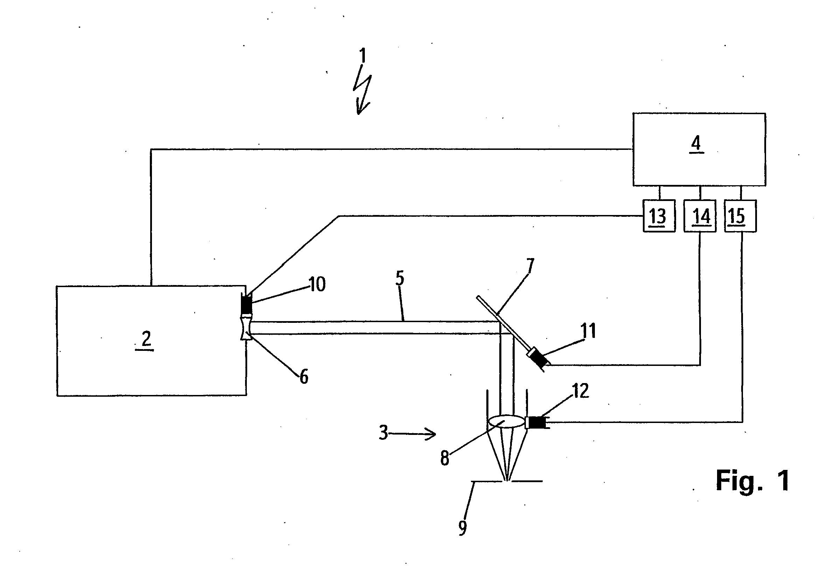

Gemäß Figur 1 umfasst eine Laseranordnung in Form einer Laserbearbeitungs- beziehungsweise Laserschneidmaschine 1 einen Lasergenerator 2, einen Bearbeitungskopf 3 sowie eine Anordnungsbeziehungsweise Maschinensteuerung 4. Ein Laserstrahl 5 wird in dem Lasergenerator 2 erzeugt. In seinen Strahlengang eingeschaltet sind optische Elemente in Form einer Auskoppellinse 6 des Lasergenerators 2, eines Umlenkspiegels 7 sowie einer in dem Bearbeitungskopf 3 angeordneten Fokussierlinse 8. Mittels der Fokussierlinse 8 wird der Laserstrahl 5 auf ein zu bearbeitendes Werkstück 9 gebündelt.

Die Temperatur der Auskoppellinse 6, des Umlenkspiegels 7 und der Fokussierlinse 8 wird überwacht. Hierzu dienen als Ultraschallwandler ausgebildete Erfassungseinrichtungen 10, 11, 12. Jede dieser Erfassungseinrichtungen 10 - 12 umfasst einen Ultraschallsender und einen Ultraschallempfänger. Die Erfassungseinrichtungen 10 - 12 sind jeweils mit Auswerteeinrichtungen 13 - 15 verbunden, die wiederum mit der Maschinensteuerung 4 in Verbindung stehen. Die Ultraschalllaufzeiten beziehungsweise Änderungen der Laufzeiten werden erfasst und ausgewertet. Aus diesen Informationen lassen sich Informationen über den Absorptionsgrad der optischen Elemente sowie der Temperatur beziehungsweise Temperaturgradienten der optischen Elemente ableiten.

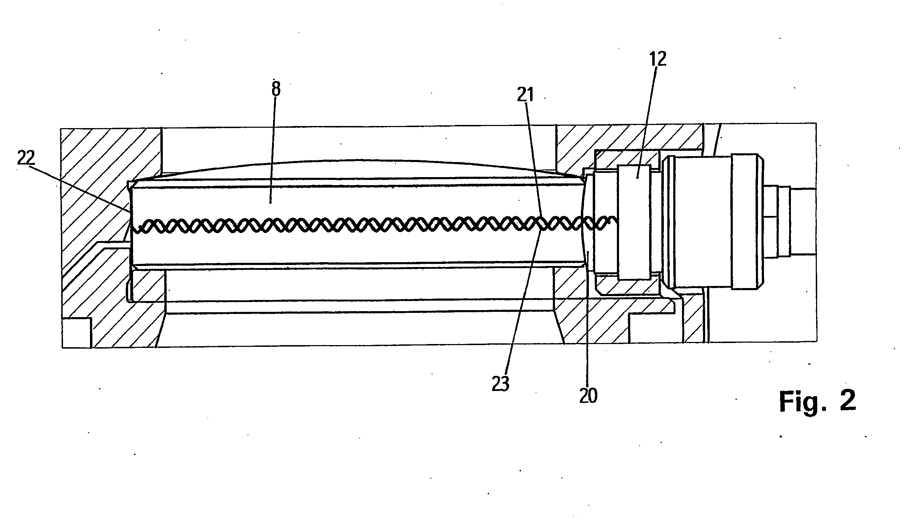

Gemäß der Figur 2 ist die Erfassungseinrichtung 12 seitlich neben dem als Fokussierlinse 8 ausgebildeten optischen Element angeordnet. Zwischen der Erfassungseinrichtung 12, die einen Ultraschallsender und einen Ultraschallempfänger aufweist, und der Fokussierlinse 8 ist ein als Koppelkissen ausgebildetes Koppelelement 20 angeordnet. Dieses passt sich an die Konturen sowohl der Erfassungseinrichtung 12 als auch der Fokussierlinse 8 an. Ein ausgesandtes Ultraschallsignal 21 breitet sich entlang des Durchmessers der Fokussierlinse 8 bis zum als Reflektor wirkenden gegenüberliegenden Rand 22 der Fokussierlinse 8 aus. Dort wird das Ultraschallsignal 21 reflektiert und gelangt als Echosignal 23 zurück zur Erfassungseinrichtung 12. Aus der Laufzeit des Ultraschallsignals 21, 23 bzw. einer Änderung der Laufzeit im Vergleich zu einer Referenzlaufzeit oder einer Referenzlaufzeitänderung kann auf die Temperatur und den Absorptionsgrad der Fokussierlinse 8 geschlossen werden.

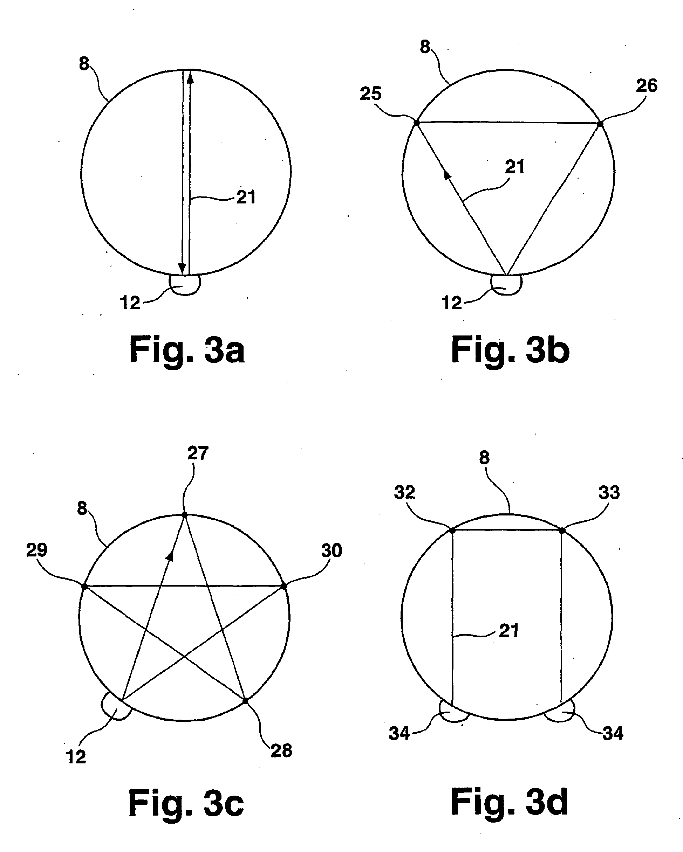

In der Figur 3a ist eine Draufsicht auf die Fokussierlinse 8 dargestellt. Das Ultraschallsignal 21, welches von der Erfassungseinrichtung 12 ausgesandt wird, gelangt nach zweimaligem Durchqueren der Fokussierlinse 8 wieder zurück zur Erfassungseinrichtung 12. Die von dem Ultraschallsignal zurückgelegte Strecke geht durch den Mittelpunkt der Fokussierlinse 8.

Gemäß der Figur 3b liegt der Mittelpunkt der Fokussierlinse 8 nicht auf der vom Ultraschallsignal 21 zurückgelegten Strecke. Das Ultraschallsignal 21 wird an den Punkten 25, 26 am Rand der Fokussierlinse 8 reflektiert, ehe es zurück zur Erfassungseinrichtung 12 gelangt. Die vom Ultraschallsignal 21 zurückgelegte Strecke hat in diesem Fall eine Dreiecksform, so dass die vom Ultraschallsignal 21 zurückgelegte Strecke nur Randbereiche der Fokussierlinse 8 umfasst. Das Zentrum der Fokussierlinse 8 hat in diesem Fall für die Laufzeitermittlung beziehungsweise für die Temperaturermittlung einen vernachlässigbaren Einfluss.

Gemäß der Figur 3c wird das durch die Erfassungseinrichtung 12 ausgesandte Ultraschallsignal 21 an den Punkten 27, 28, 29, 30 am Rand der Fokussierlinse 8, der als Reflektor wirkt, reflektiert, ehe es zurück zur Erfassungseinrichtung 12 gelangt. Durch die Reflektion des Ultraschallsignals an den Punkten 27 - 30 wird die vom Ultraschallsignal 21 zurückgelegte Strecke verlängert. In diesem Fall weist die Strecke im Wesentlichen eine Sternform auf.

In der Figur 3d wird das Ultraschallsignal 21 durch den Ultraschallsender 31 ausgesandt, an den Punkten 32, 33 am Rand der Fokussierlinse 8 reflektiert, und gelangt dann in den Ultraschallempfänger 34, der in diesem Fall die Erfassungseinrichtung darstellt.

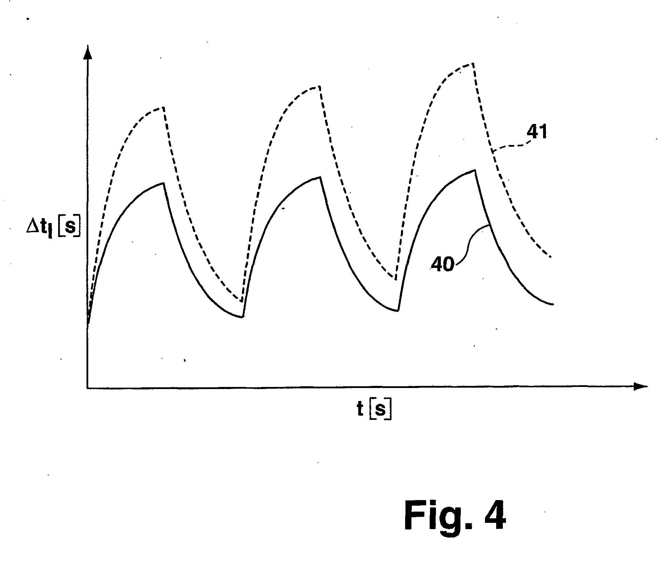

In der Figur 4 sind Laufzeitänderungen Δt₁ des Ultraschallsignals gegenüber der Zeit t aufgetragen. Die erste Kurve 40 stellt die Laufzeitänderung Δt₁ für eine neue Linse mit einem geringen Absorptionsgrad dar. Die Kurve 41 stellt die Laufzeitänderung Δt₁ für eine leicht verschmutzte Linse mit einem etwas höheren Absorptionsgrad dar. Der Laser wurde wiederholt eingeschaltet und ausgeschaltet. Während der Einschaltdauer erhöht sich die Laufzeitänderung Δt₁, was darauf zurückzuführen ist, dass die Linse sich erwärmt. Aus der Laufzeitänderung Δt₁ kann somit auf die Temperatur der Linse geschlossen werden. Während der Ausschaltphasen des Lasers kühlt die Linse wieder ab, so dass die Laufzeitänderung Δt₁ abnimmt. Es ist zu erkennen, dass die Maxima der Laufzeitänderung Δt₁ sich mit fortlaufender Zeit t erhöhen. Dies ist darauf zurückzuführen, dass die Linse während der Ausschaltzeit des Lasers nicht vollständig abkühlt. Dieses Phänomen kann bei der Auswertung der Laufzeitänderung Δt₁ berücksichtigt werden. Deutlich zu erkennen ist auch, dass die Maxima der Laufzeitänderung Δt₁ der Linse mit einem höheren Absorptionsgrad deutlich höher liegen als die Maxima der Linse mit geringerem Absorptionsgrad. Dies ist darauf zurückzuführen, dass in der Linse mit höherem Absorptionsgrad vermehrt Laserleistung absorbiert wird, wodurch sich die Linse stärker erwärmt. Aus dem Vergleich der Kurven 40, 41 lässt sich somit auf die Temperatur der Linsen und auf den Absorptionsgrad der Linsen schließen.

## Patentansprüche

1. Verfahren zur Zustandserkennung oder Zustandsänderungserkennung eines optischen Elements (6, 7, 8) einer Laseranordnung (1), insbesondere einer Laserbearbeitungsmaschine, bei dem eine sich bei einer Temperaturänderung des optischen Elements (6, 7, 8) verändernde Größe erfasst wird, **dadurch gekennzeichnet, dass** in das optische Element (6, 7, 8) ein Ultraschallsignal (21) eingekoppelt wird und die Laufzeit und/oder eine Laufzeitänderung (Δt₁) des Ultraschallsignals (21) entlang einer vorgegebenen oder vorgebbaren Strecke durch das optische Element (6, 7, 8) erfasst wird.

2. Verfahren nach Anspruch 1, **dadurch gekennzeichnet, dass** aus der Laufzeit und/oder Laufzeitänderung (Δt₁) auf den Absorptionsgrad von elektromagnetischer Strahlung des optischen Elements (6, 7, 8) oder auf eine Änderung des Absorptionsgrads geschlossen wird.

3. Verfahren nach Anspruch 1 oder 2, **dadurch gekennzeichnet, dass** aus der Laufzeit und/oder Laufzeitänderung (Δt₁) auf die Temperatur oder eine Temperaturänderung des optischen Elements (6, 7, 8) geschlossen wird.

4. Verfahren nach einem der vorhergehenden Ansprüche, **dadurch gekennzeichnet, dass** die vorgegebene oder vorgebbare Strecke durch das Zentrum, insbesondere den Mittelpunkt, des optischen Elements (6, 7, 8) verläuft.

5. Verfahren nach einem der vorhergehenden Ansprüche, **dadurch gekennzeichnet, dass** das Ultraschallsignal (21) radial in das optische Element (6, 7, 8) eingekoppelt wird.

6. Verfahren nach einem der vorhergehenden Ansprüche 1 bis 3 oder 5, **dadurch gekennzeichnet, dass** die Strecke ausschließlich durch Randbereiche des optischen Elements (6, 7, 8) verläuft, insbesondere das Zentrum meidet.

7. Verfahren nach einem der vorhergehenden Ansprüche, **dadurch gekennzeichnet, dass** das Ultraschallsignal (21) mittels Reflektion mehrmals durch das optische Element (6, 7, 8) geführt wird.

8. Verfahren nach einem der vorhergehenden Ansprüche, **dadurch gekennzeichnet; dass** ein Laufzeitgradient ermittelt wird.

9. Verfahren nach einem der vorhergehenden Ansprüche, **dadurch gekennzeichnet, dass** das optische Element (6, 7, 8) mit einer elektromagnetischen Strahlung, insbesondere einem Laser, beaufschlagt wird und die Laufzeit und/oder Laufzeitänderung (Δt₁) während der Bestrahlung und für eine vorgegebene oder vorgebbare Zeitspanne nach Beendigung der Bestrahlung erfasst wird.

10. Verfahren nach Anspruch 9, **dadurch gekennzeichnet, dass** das optische Element (6, 7, 8) mehrmals nacheinander intervallartig mit elektromagnetischer Strahlung beaufschlagt wird.

11. Verfahren nach einem der vorhergehenden Ansprüche, **dadurch gekennzeichnet, dass** die Laufzeit oder Laufzeitänderung (Δt₁) in vorgegebenen oder vorgebbaren zeitlichen Abständen erfasst wird.

12. Verfahren nach einem der vorhergehenden Ansprüche, **dadurch gekennzeichnet, dass** die die Umgebung des optischen Elements (6, 7, 8) beschreibenden Größen erfasst und/oder vorgegeben werden und bei der Auswertung der Laufzeiten und/oder Laufzeitänderungen (Δt₁) berücksichtigt werden.

13. Verfahren nach einem der vorhergehenden Ansprüche, **dadurch gekennzeichnet, dass** in Abhängigkeit der die Umgebung beschreibenden Größen ein Kennfeld generiert wird und eine aktuelle Laufzeit oder Laufzeitänderung (Δt₁) anhand des Kennfelds analysiert wird.

14. Laseranordnung (1), insbesondere Laserbearbeitungsmaschine, mit zumindest einem optischen Element (6, 7, 8), welches in dem Strahlengang eines Laserstrahls (5) angeordnet ist und einer Erfassungseinrichtung (10 - 12) zur Erfassung einer sich bei einer Temperaturänderung verändernden Größe, **dadurch gekennzeichnet, dass** ein Ultraschallsender (31) zum Einkoppeln von Ultraschall in das optische Element (6, 7, 8) vorgesehen ist und die Erfassungseinrichtung (10 - 12) einen Ultraschallempfänger (34) umfasst.

15. Laseranordnung nach Anspruch 14, **dadurch gekennzeichnet, dass** die Erfassungseinrichtung (10 - 12) den Ultraschallsender und den Ultraschallempfänger umfasst.

16. Laseranordnung nach einem der vorhergehenden Ansprüche 14 oder 15, **dadurch gekennzeichnet, dass** zumindest ein Reflektor zur Reflektion des Ultraschallsignals (21) vorgesehen ist.

17. Laseranordnung nach einem der vorhergehenden Ansprüche, **dadurch gekennzeichnet, dass** zumindest ein Koppelelement (20) vorgesehen ist, das zwischen einem Ultraschallsender (31) oder Ultraschallempfänger (34) und dem optischen Element (6, 7, 8) angeordnet ist.

18. Laseranordnung nach einem der vorhergehenden Ansprüche, **dadurch gekennzeichnet, dass** das Koppelelement (20) an das optische Element (6, 7, 8) anpassbar ist.

19. Laseranordnung nach einem der vorhergehenden Ansprüche, **dadurch gekennzeichnet, dass** eine mit der Erfassungseinrichtung (10 - 12) verbundene Auswerteeinrichtung (13 - 15) vorgesehen ist.

## Claims

1. A method for detecting the condition or detecting a change in the condition of an optical element (6, 7, 8) of a laser arrangement (1), in particular of a laser processing machine, in which a parameter that varies with a change in the temperature of the optical element (6, 7, 8) is detected,
**characterized in that**
an ultrasonic signal (21) is coupled into the optical element (6, 7, 8) and the transit time and/or a change in the transit time (Δt₁) of the ultrasonic signal (21) along a prespecified or prespecifiable path through the optical element (6, 7, 8) is detected.

2. The method according to Claim 1,
**characterized in that**
from the transit time and/or the transit time change (Δt₁), the degree of absorption of electromagnetic radiation of the optical element (6, 7, 8) or a change in the degree of absorption is deduced.

3. The method according to Claim 1 or 2,
**characterized in that**
from the transit time and/or the transit time change (Δt₁), the temperature or a change in temperature of the optical element (6, 7, 8) is deduced.

4. The method according to one of the previous claims,
**characterized in that**
the prespecified or prespecifiable path passes through the centre, in particular the midpoint, of the optical element (6, 7, 8).

5. The method according to one of the previous Claims,
**characterized in that**
the ultrasonic signal (21) is radially coupled into the optical element (6, 7, 8).

6. The method according to one of the previous Claims 1 to 3 or 5, **characterized in that**
the path passes exclusively through peripheral regions of the optical element (6, 7, 8), in particular avoiding the centre.

7. The method according to one of the previous Claims,
**characterized in that**
the ultrasonic signal (21) is passed through the optical element (6, 7, 8) multiple times by means of reflection.

8. The method according to one of the previous Claims,
**characterized in that**
a transit time gradient is determined.

9. The method according to one of the previous Claims,
**characterized in that**
the optical element (6, 7, 8) irradiated by an electromagnetic radiation, in particular a laser, and the transit time and/or transit time change (Δt₁) is detected during the irradiation and for a prespecified or prespecifiable time following the ending of the irradiation.

10. The method according to Claim 9, **characterized in that** the optical element (6, 7, 8) is irradiated intermittently with electromagnetic radiation.

11. The method according to one of the previous Claims,
**characterized in that**
the transit time or transit time change (Δt₁) is detected in prespecified or prespecifiable time intervals.

12. The method according to one of the previous Claims,
**characterized in that**
the parameters describing the environment of the optical element (6, 7, 8) are detected and/or prespecified and taken into account in the analysis of the transit times and/or transit time changes (Δt₁).

13. The method according to one of the previous Claims,
**characterized in that**,
depending on the parameters describing the environment, a characteristic diagram is generated and a current transit time or transit time change (Δt₁) is
analysed using the characteristic diagram.

14. A laser arrangement (1), in particular a laser processing machine, having at least one optical element (6, 7, 8), which is arranged in the beam path of a laser beam (5), and a detection device (10 - 12) for detecting a parameter that varies with a change in temperature,
**characterized in that**
an ultrasonic transmitter (31) is provided for coupling ultrasound into the optical element (6, 7, 8) and the detection device (10 - 12) comprises an ultrasonic receiver (34).

15. The laser arrangement according to Claim 14,
**characterized in that** the detection device (10 - 12) comprises the ultrasonic transmitter and the ultrasonic receiver.

16. The laser arrangement according to one of the previous Claims 14 or 15, **characterized in that** at least one reflector is provided for reflecting the ultrasonic signal (21).

17. The laser arrangement according to one of the previous Claims 14-16,
**characterized in that**
at least one coupling element (20) is provided, which is arranged between an ultrasonic transmitter (31) or ultrasonic receiver (34) and the optical element (6, 7, 8).

18. The laser arrangement according to one of the previous Claims 14-17,
**characterized in that**
the coupling element (20) can be matched to the optical element (6, 7, 8).

19. The laser arrangement according to one of the previous Claims 14-18,
**characterized in that**
an analysis device (13 - 15) connected to the detection device (10 - 12) is provided.

## Revendications

1. Procédé de détection de l'état ou du changement d'état d'un élément optique (6, 7, 8) d'un dispositif à laser (1), en particulier d'une machine d'usinage par laser, dans lequel on détecte une grandeur variable en cas de changement de température de l'élément optique (6, 7, 8), **caractérisé en ce qu'**un signal ultrasonore (21) est injecté dans l'élément optique (6, 7, 8) et que le temps de propagation et/ou une variation de temps de propagation (Δt₁) du signal ultrasonore (21) le long d'un parcours prédéfini ou prédéfinissable à travers l'élément optique (6, 7, 8) est détecté(e) ou acquis(e).

2. Procédé selon la revendication 1, **caractérisé en ce que** l'on déduit du temps de propagation et/ou de la variation de temps de propagation (Δt₁) le degré d'absorption de rayonnement électromagnétique de l'élément optique (6, 7, 8) ou une variation de ce degré d'absorption.

3. Procédé selon la revendication 1 ou 2, **caractérisé en ce que** l'on déduit du temps de propagation et/ou de la variation de temps de propagation (Δt₁) la température ou une variation de température de l'élément optique (6, 7, 8).

4. Procédé selon l'une des revendications précédentes, **caractérisé en ce que** le parcours prédéfini ou prédéfinissable passe à travers le centre, en particulier le point milieu de l'élément optique (6, 7, 8).

5. Procédé selon l'une des revendications précédentes, **caractérisé en ce que** le signal ultrasonore (21) est injecté radialement dans l'élément optique (6, 7, 8).

6. Procédé selon l'une des revendications précédentes 1 à 3 ou 5, **caractérisé en ce que** le parcours passe exclusivement par des zones périphériques de l'élément optique (6, 7, 8), en particulier évite le centre.

7. Procédé selon l'une des revendications précédentes, **caractérisé en ce que** le signal ultrasonore (21) est guidé plusieurs fois à travers l'élément optique (6, 7, 8) par réflexion.

8. Procédé selon l'une des revendications précédentes, **caractérisé en ce que** l'on détermine un gradient de temps de propagation.

9. Procédé selon l'une des revendications précédentes, **caractérisé en ce que** l'élément optique (6, 7, 8) est soumis à un rayonnement électromagnétique, en particulier un laser, et que le temps de propagation et/ou la variation de temps de propagation (Δt₁) est détecté(e) pendant l'exposition au rayonnement et pendant un intervalle de temps prédéfini ou prédéfinissable après l'exposition au rayonnement.

10. Procédé selon la revendication 9, **caractérisé en ce que** l'élément optique (6, 7, 8) est soumis ou exposé à un rayonnement électromagnétique plusieurs fois de suite à la façon d'intervalles.

11. Procédé selon l'une des revendications précédentes, **caractérisé en ce que** le temps de propagation et/ou la variation de temps de propagation (Δt₁) est détecté(e) ou acquis(e) à intervalles de temps prédéfinis ou prédéfinissables.

12. Procédé selon l'une des revendications précédentes, **caractérisé en ce que** les grandeurs qui décrivent l'environnement de l'élément optique (6, 7, 8) sont détectées et/ou prédéfinies et prises en compte lors de l'évaluation des temps de propagation et/ou des variations de temps de propagation (Δt₁).

13. Procédé selon l'une des revendications précédentes, **caractérisé en ce qu'**un diagramme caractéristique est généré en fonction des grandeurs qui décrivent l'environnement et qu'un temps de propagation actuel et/ou une variation de temps de propagation (Δt₁) actuelle est analysé(e) à l'aide du diagramme caractéristique.

14. Dispositif à laser (1), en particulier machine d'usinage par laser, avec au moins un élément optique (6, 7, 8) qui est disposé dans le chemin optique d'un faisceau laser (5) et un dispositif de détection (10 - 12) pour détecter une grandeur variable lors d'un changement de température, **caractérisé en ce qu'**il est prévu un émetteur ultrasonore (31) pour injecter des ultrasons dans l'élément optique (6, 7, 8) et que le dispositif de détection (10 - 12) comprend un récepteur ultrasonore (34).

15. Dispositif à laser selon la revendication 14, **caractérisé en ce que** le dispositif de détection (10 - 12) comprend l'émetteur ultrasonore et le récepteur ultrasonore.

16. Dispositif à laser selon l'une des revendications précédentes 14 ou 15, **caractérisé en ce qu'**il est prévu au moins un réflecteur pour réfléchir le signal ultrasonore (21).

17. Dispositif à laser selon l'une des revendications précédentes, **caractérisé en ce qu'**il est prévu au moins un élément de couplage (20) qui est disposé entre un émetteur ultrasonore (31) ou un récepteur ultrasonore (34) et l'élément optique (6, 7, 8).

18. Dispositif à laser selon l'une des revendications précédentes, **caractérisé en ce que** l'élément de couplage (20) est adaptable à l'élément optique (6, 7, 8).

19. Dispositif à laser selon l'une des revendications précédentes, **caractérisé en ce qu'**il est prévu un dispositif d'évaluation (13 - 15) relié au dispositif de détection ou d'acquisition (10 - 12).
